# EUROPEAN PATENT SPECIFICATION

(11) **EP 2 224 514 B1**
(45) Date of publication and mention of the grant of the patent: **01.10.2014**
(21) Application number: 10153857.7
(22) Date of filing: 17.02.2010
(51) Int. Cl.: H01M 2/18, H01G 9/02, H01G 9/04, H01G 9/00, H01G 9/06, H01G 11/26, H01G 11/50, H01G 9/008, H01G 11/12, H01G 11/52, H01G 11/70, H01G 11/80, H01M 10/0525, H01M 4/70, H01M 2/16

(54) **Electric Storage Device, And Production Method Thereof**
Elektrische Speichervorrichtung und Herstellungsverfahren dafür
Dispositif de stockage électrique et procédé de production correspondant

(30) Priority: 25.02.2009 JP 2009042139
(43) Date of publication of application: 01.09.2010
(73) Proprietor: Fuji Jukogyo Kabushiki Kaisha, Tokyo 160-8316 (JP)
(72) Inventor: Fujii, Tsutomu, Tokyo 160-8316 (JP)
(74) Representative: Sajda, Wolf E.

(56) References cited:
- EP-A1- 1 973 188
- US-A- 4 294 899
- US-A- 5 705 292
- US-A1- 2002 119 373
- US-A1- 2008 221 629
- US-A1- 2008 299 455
- US-A1- 2009 136 834

## Description

### BACKGROUND OF THE INVENTION

### Field of the Invention

The present invention relates to an electric storage device having incorporated therein a negative electrode mixture member provided with an ion source, and a production method thereof.

### Description of Related Art

There are a lithium ion capacitor, lithium ion secondary battery, and the like as an electric storage device mounted on an electric vehicle or a hybrid vehicle. In order to increase the energy density of the electric storage device, an electric storage device has been proposed in which a metal lithium serving as an ion source is incorporated therein. In the electric storage device described above, a metal lithium is electrochemically connected to the negative electrode, whereby lithium ions can be doped into the negative electrode from the metal lithium.

When charging/discharging is then executed between the positive electrode and the negative electrode, a capacity loss of the electric storage device, which employs a negative electrode active material having a high irreversible capacity for the negative electrode, can be reduced. Further, the potential of the negative electrode in the charged state or in the discharged state of the electric storage device can be reduced by doping the lithium ions into the negative electrode.

Specifically, the average voltage of the electric storage device can be increased due to the reduction in the average potential of the negative electrode, with the result that the energy density of the electric storage device can be enhanced.

As a method for incorporating the metal lithium into the electric storage device, there has been proposed a method in which a metal lithium foil is adhered onto a negative electrode current collector (see, for example, Japanese Patent Application Laid-Open JP-A-2008-123 826).

There have been also proposed a method in which the metal lithium foil is directly adhered onto the negative electrode mixture member (see, for example, JP-A-1999-283 676), and a method in which a metal lithium layer is formed through deposition, and this metal lithium layer is transferred onto the negative electrode mixture member (see, for example, JP-A-2008-021 901).

Further electric storage devices and methods to produce them are disclosed in US 2008/0299455 A1, EP 1 973 188 A1, US 2008/0221629 A1 and US 4 294 899 A.

### SUMMARY OF THE INVENTION

However, the incorporation of the metal lithium into the electric storage device might cause isolation of metal lithium pieces or microparticles of the metal lithium into the electric storage device, if a part of the metal lithium is dropped off from the metal lithium foil or the metal lithium layer. The isolation of the metal lithium pieces or the microparticles of the metal lithium into the electric storage device as described above entails an internal short-circuit in the electric storage device or corrosion of an outer casing, which causes a deterioration in the safety of the electric storage device.

When an abnormal condition occurs, such as when the electric storage device is opened due to the internal short-circuit or overcharge, the dropped metal lithium pieces or metal lithium microparticles might scatter into the atmosphere. When a part of the metal lithium is dropped and isolated from the negative electrode, the doping amount of the lithium ions is reduced, which deteriorates the quality of the electric storage device.

The present invention aims to enhance safety and quality of an electric storage device.

An electric storage device according to the present invention includes positive electrodes, each having a positive electrode current collector and a positive electrode mixture layer, and negative electrodes, each having a negative electrode current collector and a negative electrode mixture layer containing a negative electrode active material allowing lithium ions to be reversibly doped into and dedoped from the material,
- wherein at least one of the negative electrodes is formed as a negative electrode mixture member including a metal lithium as an ion source in addition to the negative electrode current collector and the negative electrode mixture layer,
- wherein the negative electrode mixture member is accommodated in a bag-like separator,
- wherein the bag-like separator is sealed with a polymer adhesive comprising polyvinylidene fluoride or polyethylene oxide at the edge portions of the separator.

In the electric storage device according to the present invention, the edge portion of the separator is sealed all around.

In the electric storage device according to the present invention, the positive electrode current collector and the negative electrode current collector are formed with a plurality of through-holes.

A production method of an electric storage device according to the present invention is a method of producing an electric storage device including positive electrodes, each having a positive electrode current collector and a positive electrode mixture layer, and negative electrodes, each having a negative electrode current collector and a negative electrode mixture layer containing a negative electrode active material allowing lithium ions to be reversibly doped into and dedoped from the material,
the method comprising the following steps:
- a step of forming at least one of the negative electrodes as a negative electrode mixture member including a metal lithium as an ion source in addition to the negative electrode current collector and the negative electrode mixture layer , and
- a step of accommodating the negative electrode mixture member in a bag-like separator, and
- a step of sealing the bag-like separator with a polymer adhesive comprising polyvinylidene fluoride or polyethylene oxide at the edge portions of the separator.

In the present invention, the negative electrode mixture member is accommodated in the bag-like separator. Accordingly, even when the ion source is dropped from the negative electrode mixture member, the ion source can be prevented from being isolated from the vicinity of the negative electrode (negative electrode mixture member) accommodated in the bag-like separator in the electric storage device.

Consequently, short-circuiting of the electric storage device and corrosion of the outer casing, which are caused by the diffusion of the ion source in the electric storage device, can be prevented, whereby the safety of the electric storage device can be enhanced. The metal lithium can be kept in the bag-like separator.

Therefore, any scattering of the metal lithium into the atmosphere when the electric storage device is opened can be prevented, and hence, the safety of the electric storage device can be enhanced when an abnormal condition occurs. Since the negative electrode (negative electrode mixture member) is accommodated into the bag-like separator, the ion source can be retained in the vicinity of the negative electrode (negative electrode mixture member) even when the ion source is dropped from the negative electrode (negative electrode mixture member).
Consequently, the doping amount of the lithium ions can be secured as planned, whereby a deterioration of the quality of the electric storage device can be prevented. Since the ion source is provided on the negative electrode, the current collector for the ion source can be eliminated. Thus, the energy density of the electric storage device can be enhanced.

### BRIEF DESCRIPTION OF THE DRAWINGS

- FIG. 1: is a perspective view illustrating an electric storage device according to one embodiment of the present invention;
- FIG. 2: is a sectional view schematically showing the internal structure of the electric storage device along A-A line in FIG. 1;
- FIG. 3: is a sectional view showing the internal structure of the electric storage device as partially enlarged;
- FIG. 4A: is an exploded perspective view illustrating the internal structure of the negative electrode;
- FIG. 4B: is a perspective view illustrating the negative electrode; and
- FIG. 5: is a sectional view partially illustrating an internal structure of an electric storage device according to another embodiment.

### DETAILED DESCRIPTION OF THE PREFERRED EMBODIMENTS

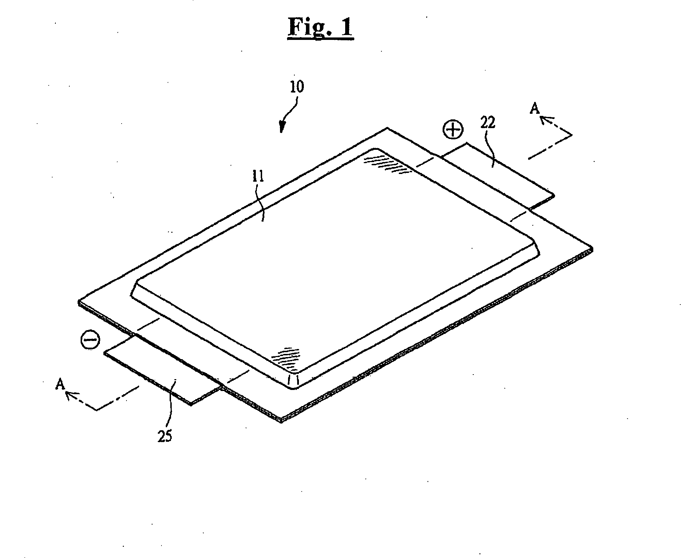

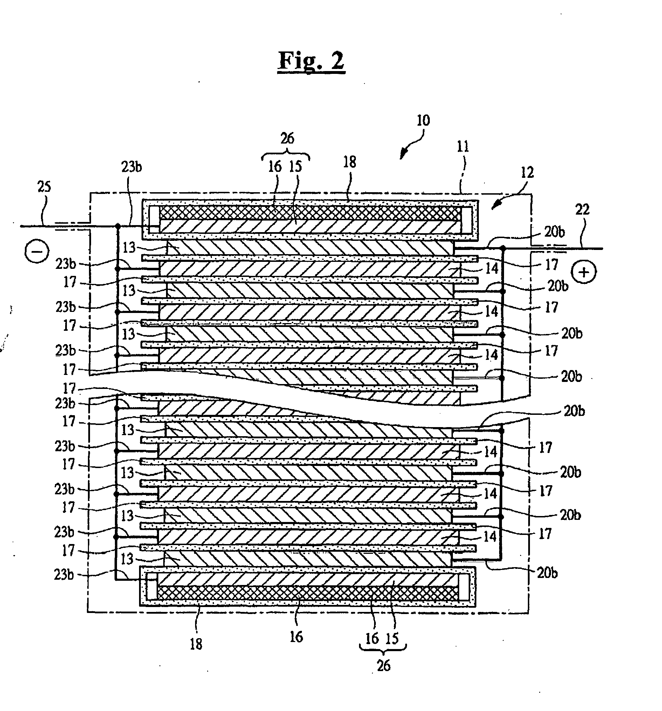

FIG. 1 is a perspective view illustrating an electric storage device 10 according to one embodiment of the present invention. FIG. 2 is a sectional view schematically showing an internal structure of the electric storage device 10 taken along a line A-A in FIG. 1. As shown in FIGS. 1 and 2, an electrode stacked unit 12 is accommodated in an outer casing 11 made of a laminate film.
The electrode stacked unit 12 includes positive electrodes 13 and negative electrodes 14 and 15 that are stacked alternately. The negative electrode 15, which is arranged at the outermost part of the electrode stacked unit 12, is formed to be a negative electrode mixture member 26 including a metal lithium foil 16, serving as an ion source. The metal lithium foil 16 is formed integral with the negative electrode 15.
A separator 17 is interposed between each of the positive electrodes 13 and each of the negative electrodes 14. On the other hand, the negative electrodes 15 are accommodated in bag-like separators 18 respectively. An electrolyte solution is injected into the outer casing 11. The electrolyte solution is made of aprotic polar solvent containing lithium salt.

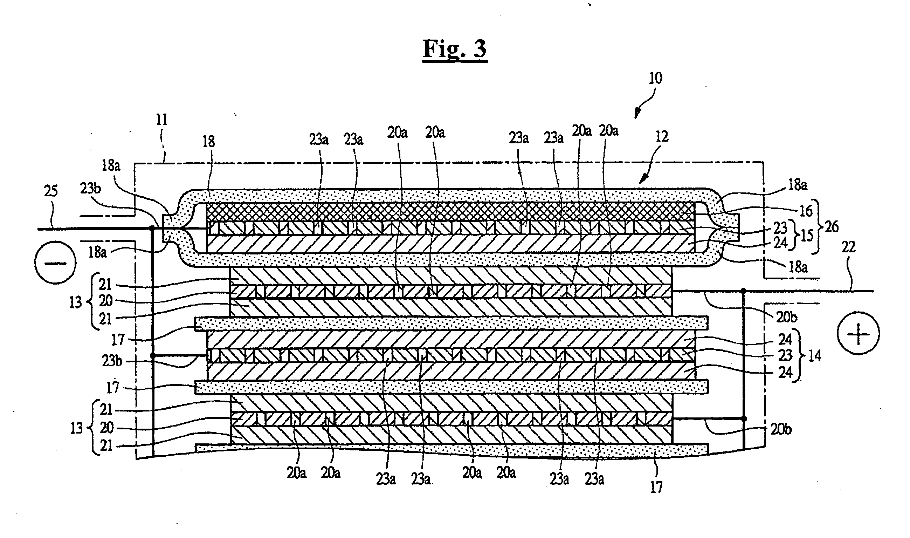

FIG. 3 is a sectional view partially showing the internal structure of the electric storage device 10 as enlarged. As shown in FIG. 3, each of the positive electrodes 13 has a positive electrode current collector 20 having a large number of through-holes 20a. A positive electrode mixture layer 21 is applied onto the positive electrode current collector 20. Terminal welding parts 20b extending convexly are provided to the positive electrode current collectors 20. Plural terminal welding parts 20b are bonded to each other as overlapped. A positive electrode terminal 22 is connected to the terminal welding parts 20b.

Similarly, each of the negative electrodes 14 and 15 has a negative electrode current collector 23 having a large number of through-holes 23a. Negative electrode mixture layers 24 are applied onto both surfaces of the negative electrode current collector 23 forming the negative electrode 14.
A negative electrode mixture layer 24 is applied on one surface of the negative electrode current collector 23 forming the negative electrode 15. The metal lithium foil 16 is applied on the surface of the negative electrode current collector 23, on which the negative electrode mixture layer 24 is not formed, of the negative electrode 15.
In other words, the negative electrode mixture layer 26 is composed of the negative electrode 15 and the metal lithium foil 16. Terminal welding parts 23b extending convexly are provided to the negative electrode current collectors 23. Plural terminal welding parts 23b are bonded to each other as overlapped. A negative electrode terminal 25 is connected to the terminal welding parts 23b.

The positive electrode mixture layer 21 contains activated carbon as a positive electrode active material. The activated carbon allows lithium ions or anions to be reversibly doped thereinto and de-doped therefrom. The negative electrode mixture layer 24 contains a polyacene-based organic semiconductor (PAS) as a negative electrode active material.
The PAS allows lithium ions to be reversibly doped thereinto and de-doped therefrom. Since the activated carbon is employed as the positive electrode active material and the PAS is employed as the negative electrode active material, the illustrated electric storage device 10 can function as a lithium ion capacitor.

The electric storage device 10 to which the present invention is applied is not limited to a lithium ion capacitor, but may be a lithium ion secondary battery or an electric double layer capacitor. For example, the electric storage device 10 may be a battery of other type, such as a magnesium ion secondary battery, or a hybrid capacitor with these batteries. In the specification of the present invention, the term doping (dope) involves storage, support, adsorbing or inserting.
Specifically, doping means a phenomenon where lithium ions and/or anions enter the positive electrode active material or the negative electrode active material. The term de-doping (de-dope) involves releasing and desorbing. Specifically, de-doping means a phenomenon where lithium ions or anions desorb from the positive electrode active material or the negative electrode active material.

As described above, the metal lithium foil 16 is adhered onto the negative electrode current collector 23 of the negative electrode 15. The negative electrode current collectors 23 of the negative electrodes 14 and 15 are bonded to each other. Therefore, the metal lithium foil 16 and all of the negative electrode mixture layers 24 are electrically connected.
Accordingly, when the electrolyte solution is injected into the outer casing 11, the lithium ions are doped (hereinafter referred to as pre-doping) into the negative electrodes 14 and 15 from the metal lithium foil 16. The positive electrode current collectors 20 and the negative electrode current collectors 23 are provided with the through-holes 20a and 23a.
Therefore, the lithium ions released from the metal lithium foil 16 pass through the through-holes 20a and 23a of the current collectors 20 and 23 so as to move in the stacking direction. Thus, the lithium ions can smoothly be pre-doped to all of the stacked negative electrodes 14 and 15.

The potential of the negative electrode can be lowered by pre-doping the lithium ions into the negative electrodes 14 and 15 as described above. By virtue of this, the cell voltage of the electric storage device 10 can be enhanced. The capacitance of the negative electrodes 14 and 15 can be enhanced by pre-doping the lithium ions into the negative electrodes 14 and 15.
Accordingly, the capacitance of the electric storage device 10 can be enhanced. Since the capacitance of the negative electrodes 14 and 15 is enhanced, the potential range (potential difference) within which the positive electrodes 13 operate can be increased, whereby the cell capacity (discharge capacity) of the electric storage device 10 can be enhanced. Since the cell voltage, the cell capacity, and the capacitance of the electric storage device 10 can be enhanced as described above, the energy density of the electric storage device 10 can be increased.
From the viewpoint of increasing the capacity of the electric storage device 10, the amount of the metal lithium foil 16 is preferably set such that the potential of the positive electrode after the positive electrode 13 and the negative electrodes 14 and 15 are short-circuited becomes 2.0 V (vs. Li/Li+) or less.

The structure in which the negative electrode mixture layer 26 is arranged at the outermost part of the electrode stacked unit 12 as shown in FIGS. 2 and 3 has been described above. However, the negative electrode mixture layer 24 may also be arranged so as to be sandwiched between the positive electrodes 13 that are positioned in the electrode stacked unit 12.
Further, the negative electrode mixture member 26 may be arranged at the outermost part of the electrode stacked unit 12, as well as the negative electrode mixture member 26 may be arranged between the positive electrodes 13 that are positioned in the electrode stacked unit 12. The structure in which the negative electrode mixture member 26 is dispersed in the electrode stacked unit 12 (electric storage device 10) can increase the doping speed of the lithium ions.
It is preferable from the viewpoint of productivity that the negative electrode mixture member 26 arranged in the electrode stacked unit 12 is configured to include the negative electrode 14 having the negative electrode mixture layers 24 applied on both surfaces, and the metal lithium foil 16 applied thereon. However, arranging the negative electrode mixture member 26 in the electrode stacked unit 12 is disadvantageous from the viewpoint of work efficiency.
Therefore, considering the work efficiency, it is more preferable that the negative electrode mixture member is arranged at the outermost part of the electrode stacked unit 12.
Accordingly, when it is intended to enhance the work efficiency and increase the doping speed of the lithium ions, it is preferable that a plurality of electrode stacked units, each having the negative electrode mixture member arranged at the outermost part, are prepared, and then, these electrode stacked units are stacked to form an electric storage device.

As shown in FIG. 3, the negative electrode mixture member 26 arranged at the outermost part of the electrode stacked unit 12 includes the metal lithium foil 16 applied on the surface of the negative electrode current collector 23, on which the negative electrode mixture layer 24 is not formed. However, the negative electrode mixture member 26 arranged at the outermost part of the electrode stacked unit 12 may be configured such that the metal lithium foil 16 is applied on the negative electrode 14 having the negative electrode mixture layer 24 on both surfaces.
When the negative electrode mixture member including the negative electrode 14 and the metal lithium foil 16 is arranged at the outermost part of the electrode stacked unit 12, it is preferable that the negative electrode mixture member is arranged with the surface, having the metal lithium foil 16 applied thereon, facing outward.
This is because, when the negative electrode mixture member is arranged with the metal lithium foil 16 facing outward, the metal lithium foil 16 is easy to be brought into contact with the electrolyte solution, which makes it easy for the metal lithium to be ionized.

However, the arrangement of the negative electrode mixture member, having two negative electrode mixture layers 24, at the outermost part of the electrode stacked unit 12 means that the negative electrode mixture layer 24 that does not face to the positive electrode mixture layer 21 and thus does not contribute to the charging/discharging is incorporated in the electric storage device 10.
This structure entails a reduction in the energy density caused by the increase in the amount of the electrolyte solution, the increase in the cell weight and the increase in the volume of the electric storage device. This structure might further destroy the charging/discharging balance between the positive electrodes 13 and the negative electrodes 14 of the electric storage device 10, which might give an adverse affect to the cycle characteristic or the like.

On the other hand, in order to arrange the negative electrode mixture member 26, having the negative electrode 15 including the negative electrode mixture layer 24 on its one surface, at the outermost part of the electrode stacked unit 12, it is necessary to form not only the negative electrode 14 having the negative electrode mixture layers 24 on both surfaces, but also to form the negative electrode 15 having the negative electrode mixture layer 24 on its one surface as shown in FIG. 3.
Specifically, two types of the negative electrodes 14 and 15 have to be formed, which is undesirable from the viewpoint of productivity. If the two types of the negative electrodes 14 and 15 are used, the stacking operation becomes complicated during the stacking process of the electrode stacked unit 12, which is undesirable from the viewpoint of productivity.
From the above, which one is arranged at the outermost part of the electrode stacked unit 12; the negative electrode mixture member 26 provided with the negative electrode 15 having the negative electrode mixture layer 24 on its one surface or the negative electrode mixture member provided with the negative electrode 14 having the negative electrode mixture layers 24 on both surfaces, is preferably selected considering the property and productivity of the electric storage device 10.

The structure in which the negative electrode 14 provided with the negative electrode mixture layers 24 on both surfaces is arranged at the outermost part of the electrode stacked unit 12 has been described above. However, the present invention is not limited thereto. The positive electrode 13 provided with the positive electrode mixture layers 21 on both surfaces may be arranged at the outermost part of the electrode stacked unit 12.
When the electrode (positive electrode or negative electrode) provided with the electrode mixture layers (positive electrode mixture layer or negative electrode mixture layer) on both surfaces is arranged at the outermost part of the electrode stacked unit 12, either of the positive or negative electrodes having a greater capacity is preferably arranged at the outermost part.
Specifically, the capacity of the electric storage device 10 is controlled by either of the positive and the negative electrodes having a smaller capacity. When the electrode having the smaller capacity is arranged in the electrode stacked unit 12, the smaller capacity of the electrode can fully be utilized, whereby the energy density of the electric storage device 10 can be enhanced.

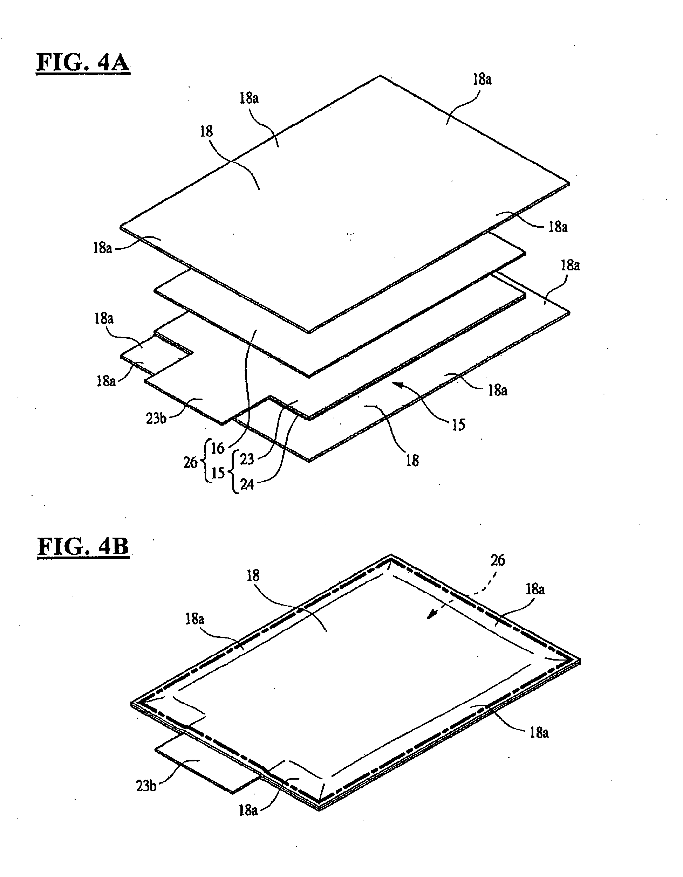

Next, the negative electrode 15 of the electric storage device 10 according to the present invention will be described. FIG. 4A is an exploded perspective view illustrating the internal structure of the negative electrode mixture member 26 accommodated in the bag-like separator 18. FIG. 4B is a perspective view illustrating the negative electrode mixture member 26 accommodated in the bag-like separator 18.
As shown in FIG. 3, the negative electrode current collector 23 has a large number of through-holes 23a formed thereon. In FIG. 4A, the through-holes 23a of the negative electrode current collector 23 are not illustrated. As shown in FIG. 4A, the metal lithium foil 16 is adhered on one surface of the negative electrode current collector 23 of the negative electrode 15 that forms the negative electrode mixture member 26.
The negative electrode 15 having the metal lithium foil 16 adhered thereon, i.e., the negative electrode mixture member 26, is sandwiched between a pair of the separators 18. All of the edge portions 18a of the separator 18 are sealed as indicated by a one-dot-chain line in FIG. 4B. In the above description, the negative electrode mixture member 26 is sandwiched between a pair of separators 18, and then, all edge portions 18a of the separator 18 are sealed.
However, the present invention is not limited thereto. For example, three edge portions 18a of the pair of the separators 18 may be sealed to form a bag-like shape, and then, the negative electrode mixture member 26 may be inserted into the bag-like separator 18.
Thereafter, the remaining one edge portion 18a that is not closed may be sealed, which means that all edge portions 18a of the separator 18 are finally sealed. The procedure before the negative electrode mixture member 26 is accommodated in the bag-like separator 18 may appropriately be determined.

Examples of the method for sealing the edge portions 18a of the separator 18 include a tape-sealing by means of an adhesive tape, bonding by means of a polymer adhesive agent, and the like. With the methods described above, the edge portions 18a of the separator 18 can be sealed.
When the separator 18 is made of a material containing thermoplastic resin such as polyethylene or polypropylene, the edge portions 18a of the separator 18 can be sealed by a heat-sealing process in addition to the methods described above. The edge portions 18a of the separator 18 may be sealed by combining the tape-sealing by means of an adhesive tape, the bonding by means of a polymer adhesive agent, and the heat-sealing process.
Terminal welding parts 23b extending convexly are provided to the negative electrode current collectors 23. The edge portion 18a of the separator 18 holding the terminal welding part 23b is preferably sealed by the heat-sealing process or the bonding method by means of the polymer adhesive agent.
Since the edge portion 18a described above is subject to the heat-sealing process or the bonding by means of the polymer adhesive agent, an insulating process can be made on the surface of the terminal welding part 23b close to the negative electrode mixture layer 24. With this structure, the deposition of the metal lithium onto the terminal welding part 23b caused by the charging/discharging cycle can be prevented.

As described above, the negative electrode mixture member 26 including the metal lithium foil 16 and the negative electrode 15, which are integrally formed, is provided, and this negative electrode mixture member 26 is enclosed by the bag-like separator 18.
Accordingly, even when the metal lithium is dropped from the negative electrode current collector 23 of the negative electrode 15, there is no possibility that the metal lithium passes through the bag-like separator 18 that is sealed at all edges, whereby the diffusion of the metal lithium in the electric storage device 10 can be prevented.
Consequently, short-circuiting in the electric storage device 10 or the corrosion of the outer casing 11 caused by free metal lithium can be prevented, whereby the safety of the electric storage device 10 can be enhanced. The metal lithium can be kept in the bag-like separator 18. Therefore, any scattering of the metal lithium into the atmosphere when the electric storage device 10 is opened can be prevented, and hence, the safety of the electric storage device 10 can be enhanced when an abnormal condition occurs.
Even when the metal lithium is dropped from the negative electrode current collector 23 of the negative electrode 15, the metal lithium can be retained in the vicinity of the negative electrode 15. Therefore, the doping amount of the lithium ions can be secured as designed. Consequently, a reduction in the capacity and a reduction in the output of the electric storage device 10 can be prevented.
Since the metal lithium foil 16 is supported by the negative electrode current collector 23, a lithium electrode current collector for supporting the metal lithium foil 16 can be eliminated. With this, the weight and volume of the electric storage device 10 can be decreased, resulting in that the energy density of the electric storage device 10 can be enhanced.

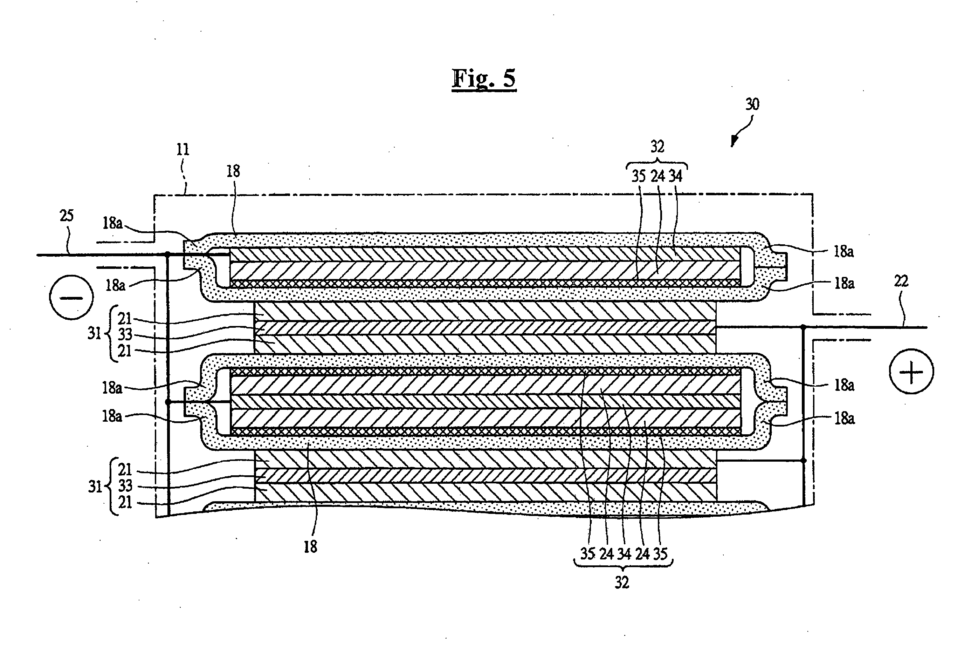

In the description above, the positive electrode current collector 20 or the negative electrode current collector 23 is formed with a large number of through-holes 20a or 23a. However, a negative electrode current collector or a positive electrode current collector having no through-holes 20a or 23a may also be employed. FIG. 5 is a sectional view partially illustrating an internal structure of an electric storage device 30 according to another embodiment. The members same as those in FIG. 3 are identified by the same numerals, and the description will not be repeated.

As illustrated in FIG. 5, the electric storage device 30 is composed of positive electrodes 31 and negative electrodes (negative electrode mixture members) 32 that are stacked alternately. A positive electrode 31 has a positive electrode current collector 33 having a flat plate shape. The positive electrode current collector 33 is provided with a positive electrode mixture layer 21.
A negative electrode 32 has a negative electrode current collector 34 having a flat plate shape. The negative electrode current collector 34 is provided with a negative electrode mixture layer 24. A metal lithium foil 35 serving as an ion source is adhered onto the negative electrode mixture layer 24 of the negative electrode 32.
The negative electrode 32 having the metal lithium foil 35 adhered thereon is covered by a bag-like separator 18. The negative electrode mixture layer 24 and the metal lithium foil 35 are formed only on one surface (inner side) of the negative electrode current collector 34 of the negative electrode 32 that is arranged at the outermost part.

In case where the metal lithium foil 35 is adhered on all of the negative electrode mixture layers 24 as described above, it is unnecessary to move the lithium ions in the stacking direction over the positive electrode current collector 33 and the negative electrode current collector 34, when the lithium ions are doped into all the negative electrode mixture layers 24.
With this structure, the through-holes can be eliminated from the positive electrode current collector 33 or the negative electrode current collector 34. Therefore, the production cost of the positive electrode current collector 33 and the negative electrode current collector 34 can be reduced, and the coating cost of the positive electrode mixture layer 21 and the negative electrode mixture layer 24 can be reduced.
Even the case of the negative electrode 32 described above can prevent the isolation of the metal lithium, like the above-mentioned electric storage device 10, by the structure in which the negative electrode 32 is enclosed by the bag-like separator 18. Accordingly, short-circuiting in the electric storage device 30 or corrosion of the outer casing 11 caused by the free metal lithium can be prevented, whereby the safety of the electric storage device 30 can be enhanced. The metal lithium can be stayed in the bag-like separator 18. Therefore, any scattering of the metal lithium into the atmosphere when the electric storage device 30 is opened can be prevented, and hence, the safety of the electric storage device 30 can be enhanced when an abnormal condition occurs. Further, the doping amount of the lithium ions can be secured as designed, whereby the quality of the electric storage device 30 can be enhanced.

Although the metal lithium foil 16 is directly adhered onto the negative electrode current collector 23 as illustrated in FIG. 3, the present invention is not limited thereto. An auxiliary layer described in JP-A-2001-015 172 may be formed between the negative electrode current collector 23 and the metal lithium foil 16.
When the metal lithium foil 16 is adhered onto the negative electrode current collector 23 via the auxiliary layer, the increase in the electrode resistance caused by the formation of the metal lithium foil 16 can be suppressed. Although the metal lithium foil 35 is directly adhered onto the negative electrode mixture layer 24 as illustrated in FIG. 5, the present invention is not limited thereto.
An auxiliary layer described in JP-A-2001-015 172 may be formed between the negative electrode mixture layer 24 and the metal lithium foil 35. When the metal lithium foil 35 is adhered onto the negative electrode mixture layer 24 via the auxiliary layer, the increase in the electrode resistance caused by the formation of the metal lithium foil 35 can be suppressed.

The components of the aforesaid electric storage device will be explained in detail in the following order:
A: positive electrode,
B: negative electrode,
C: positive electrode current collector and negative electrode current collector,
D: ion source,
E: separator,
F: electrolyte solution, and
G: outer casing.

### A: Positive electrode

The positive electrode has the positive-electrode current collector and the positive electrode mixture layer coated on the positive electrode current collector. When the electric storage device functions as a lithium ion capacitor, a material that allows lithium ions and/or anions to be reversibly doped and de-doped can be employed as a positive electrode active material contained in the positive electrode mixture layer.
Specifically, the positive electrode active material is not particularly limited, as long as it allows at least one of lithium ions or anions to be reversibly doped and de-doped. Examples of the positive-electrode active materials include activated carbon, metal oxide such as RuO_{2,} conductive polymer, and polyacene-based substance.

For example, the activated carbon is preferably made of an activated carbon grain that is subject to an alkali activation treatment and has a specific surface area of 600 m²/g or more.
A phenolic resin, petroleum pitch, petroleum coke, coconut husk, coal-derived coke, etc. are used as the raw material of the activated carbon. Among them, phenolic resin and coal-derived coke are more preferable, since they can increase the specific surface area.
Preferable alkali activators used for the alkali activation treatment of the activated carbons include hydroxide salts of an alkali metal such as lithium, sodium and potassium. Among them potassium hydroxide and sodium hydroxide are more preferable.
Examples of the methods of the alkali activation include a method in which a carbide and an activator are mixed, and then the resultant is heated in an airflow of inert gas. Further, there is a method in which an activator is carried on a raw material of an activated carbon beforehand, the resultant is heated, and then, a carbonizing process and an activating process are performed.
Further, there is a method in which a carbide is activated with a gas activation by using water vapors, and then, the resultant is surface-treated with an alkali activator. The activated carbon to which the alkali activation treatment is performed is fully washed to remove the residual ash and adjust pH, and then, pulverized by means of a known pulverizer such as a ball mill or the like. A wide range of the grain size generally used can be applied.
For example, it is preferable that D50 % is 2 µm or more, more preferably 2 µm to 50 µm, and most preferably 2 µm to 20 µm. The average pore diameter is preferably 1.5 nm or more. The preferable specific surface area is 600 to 3000 m²/g. An activated carbon having a specific surface area of 1500 m²/g or more, particularly 1800 to 2600 m²/g is more preferable.

When the electric storage device functions as a lithium ion secondary battery, a conductive polymer such as polyaniline or a material that allows lithium ions to be reversibly doped or de-doped can be employed as the positive electrode active material contained in the positive electrode mixture layer. For example, vanadium oxide (V₂O₅) or lithium cobalt oxide (LiCoO₂) can be used as the positive electrode active material.
Examples of the other materials include a lithium-containing metal oxide represented by a chemical formula of LixMyOz (x, y, z are positive numbers, M is a metal, or can be metals of two or more types), such as LixCoO₂, LixNiO₂, LixMnO₂ and LixFeO₂ or a transition metal oxide such as cobalt, manganese, vanadium, titanium and nickel, or a sulfide.
In case of requiring a high voltage, a lithium-containing oxide having a potential of 4 V or more with respect to the metal lithium is preferably used. More preferable lithium-containing oxides include a lithium-containing cobalt oxide, lithium-containing nickel oxide, or lithium-containing cobalt-nickel composite oxide.
When high safety is required, it is preferable to use a material that is less likely to release oxygen from the structure even under the high-temperature environment. Examples of the material include lithium iron phosphate, lithium iron silicate, vanadium oxide, etc. The positive electrode active material described above may be used alone or a plurality of materials may be mixed in accordance with the purpose and specification.

The positive electrode active material such as the activated carbon described above is formed into a powdery shape, granular shape, short fibrous shape, etc. The positive electrode active material and a binder are dispersed into a solvent, whereby an electrode slurry is formed. The electrode slurry containing the positive electrode active material is coated on the positive electrode current collector and the resultant is dried, whereby the positive electrode mixture layer is formed on the positive electrode current collector.
Usable binders mixed with the positive electrode active material include rubber binder such as SBR, fluorine-containing resin such as polytetrafluoroethylene and polyvinylidene fluoride, thermoplastic resin such as polypropylene, polyethylene and polyacrylate, and polyvinyl alcohol. Water or N-methyl-2-pyrolidone can be used as the solvent. A conductive material such as acetylene black, graphite, ketjen black, carbon black and metal powder can appropriately be added to the positive electrode mixture layer.

### B: Negative electrode

The negative electrode has the negative electrode current collector and the negative electrode mixture layer coated on the negative electrode current collector. The negative electrode mixture layer contains a negative electrode active material. The negative electrode active material is not particularly limited, as long as it allows lithium ions to be reversibly doped and de-doped.
Examples of the material used for the negative electrode active material include alloy material such as tin and silicon, etc., oxide such as silicon oxide, tin oxide, lithium titanate and vanadium oxide, carbon material such as graphite, graphitizable carbon and hard carbon (non-graphitizable carbon), and polyacene-based material.
Since lithium titanate has an excellent cycle characteristic, it is preferable for the negative electrode active material. Since tin, tin oxide, silicon, silicon oxide, and graphite can increase capacity, they are preferable for the negative electrode active material.
Further, a polyacene-based organic semiconductor (PAS) that is a heat-treated material of an aromatic condensation polymer is preferable for a negative electrode active material, since it can increase the capacity. The PAS has a polyacene skeletal structure. The ratio of a number of hydrogen atoms to a number of carbon atoms (H/C ratio) is preferably within the range between 0.05 and 0.50. When the H/C ratio of the PAS exceeds 0.50, the aromatic polycyclic structure is not sufficiently grown, so that the lithium ions cannot smoothly be doped or de-doped.
Therefore, the charging/discharging efficiency of the electric storage device 10 might be reduced. When the H/C ratio of the PAS is less than 0.05, the capacity of the electric storage device might be reduced. The negative electrode active material described above may be used alone or a plurality of materials may be mixed in accordance with the purpose and specification.

The aforesaid negative electrode active material such as PAS is formed into a powdery shape, a granular shape or short fibrous shape. The negative electrode active material and a binder are dispersed into a solvent, whereby an electrode slurry is formed. The electrode slurry containing the negative electrode active material is coated on the negative electrode current collector and the resultant is dried, whereby the negative electrode mixture layer is formed on the negative electrode current collector.
Usable binders mixed with the negative electrode active material include fluorine-containing resin such as polytetrafluoroethylene and polyvinylidene fluoride, thermoplastic resin such as polypropylene, polyethylene and polyacrylate, polyvinyl alcohol, carboxyl methyl cellulose (CMC), styrene butadiene rubber (SBR), ethylene-propylene-diene copolymer (EPDM), etc.
Among these materials, SBR rubber binder is more preferable, since it can exhibit high adhesive property even with a small amount. Water or N-methyl-2-pyralidone can be used as the solvent. A conductive material such as acetylene black, graphite, expanded graphite, carbon nano-tube, vapor growth carbon fiber, carbon black, carbon fiber and metal powder can appropriately be added to the negative electrode mixture layer.

### C: Positive electrode current collector and negative electrode current collector

Various materials generally proposed for a battery or an electric double layer capacitor can be employed as the material of the negative electrode current collector and the positive electrode current collector. For example, aluminum, stainless steel or the like can be used as the material of the positive electrode current collector. Stainless steel, copper, nickel, etc. can be used as the material of the negative electrode current collector.
When through-holes are formed on the positive electrode current collector or the negative electrode current collector, the open-percentage of the through-holes is generally set to 40 to 60. The size, shape and number of the through-hole are not particularly limited, and they may appropriately be set so long as they do not hinder the movement of the lithium ions.

### D: Ion source

Although a metal lithium foil is provided as the ion source, a lithium aluminum alloy may also be used as the ion source. In the above description, the metal lithium foil formed by extending the metal lithium by applying pressure is used. However, the present invention is not limited thereto.
A metal lithium layer may be formed through the deposition on the negative electrode current collector or the negative electrode mixture layer. Alternatively, the ion source may be formed on the negative electrode, serving as the negative electrode mixture member, by containing a fine granular metal lithium into the negative electrode mixture layer.

### E: Separator

A porous member or the like having a high ion permeation rate (air permeability), predetermined mechanical strength, and durability with respect to the electrolyte solution, positive electrode active material, negative electrode active material, or the like, having through-holes and having no electron conductivity can be used for the separator.
Generally, paper (cellulose), a cloth having a gap and made of glass fiber, polyethylene, polypropylene, polystyrene, polyester, polytetrafluoroethylene, polyvinylidene difluoride, polyimide, polyphenylene sulfide, polyamide, polyamide imide, polyethylene terephthalate, polybutylene terephthalate, polyether, ether ketone, etc., nonwoven fabric, or microporous body is used.

When the separator is sealed, an adhesive tape or polymer adhesive agent can be used. It is preferable that the adhesive tape or the polymer adhesive agent is not dissolved into the electrolyte solution, and is chemically and electrochemically stable against the electrolyte solution, the positive electrode active material, and negative electrode active material. Examples of the adhesive tape include polyimide adhesive tape. The polymer molecules used as the polymer adhesive agent preferably have thermoplasticity.
Examples of the polymer molecules include polyolefin such as polyethylene, polypropylene, etc., polyethylene terephthalate, polyester, polyvinylidene fluoride, polyethylene oxide, etc. An Example of the method of sealing the separator is a method in which the polymer adhesive agent is dissolved into a solvent, the resultant is applied onto the edge portions of the separator, and then, the solvent is removed by applying heat or reducing pressure, while applying pressure to the sealed portion.
According to the invention, a polymer film containing the polymer adhesive agent is arranged at the edge portions of the separator, and then, pressure is thermally applied to seal the separator. The polymer adhesive agent is polyvinylidene fluoride or polyethylene oxide having lithium ion conductivity, because they can prevent the deterioration of the property of the electrode even when the polymer adhesive agent is adhered onto the electrode mixture layer.
An organic solvent having a boiling point of 200 °C or lower is desirably used as the solvent for dissolving the polymer adhesive agent. With respect to the used polymer adhesive agent, although depending upon the solubility, specific examples of the solvent include dimethylformamide, acetone, etc. An organic solvent with the boiling point of higher than 200 °C is not preferable since the time taken for removing the solvent through the application of heat of about 100 °C increases.
Application of heat at 200 °C or higher is not preferable from the viewpoint of safety, since the metal lithium is present in the vicinity of the sealed portion of the separator. From the reason described above, the boiling point of the organic solvent is preferably 200 °C or lower, and more preferably, 180 °C or lower.

When the materials described above such as polyethylene, polypropylene, polystyrene, polyethylene terephthalate and polyester are contained in the separator, the separator can be sealed through the heat-sealing process. The condition for heat-sealing the separator is determined by appropriately examining the temperature for the heating and time taken for the heating.
The temperature for heating the separator is preferably set to be close to the melting temperature of the separator. The specific melting temperature differs depending upon the material and structure of the separator. For example, the microporous separator that the inventor has and that is made of polyethylene and polypropylene is melted at about 110 °C.
Therefore, when the separator described above is to be heat-sealed, the separator is melted, while changing the temperature for the heating and the time taken for the heating at about 110 °C, and the sealing strength is confirmed to thereby determine the heat-sealing condition. A short heating time and a low melting temperature are not preferable since they cause poor sealing.
A long heating time and a high melting temperature are not preferable since the separator is bent, or the separator is melted to the portion where the separator is brought into contact with the surface of the electrode mixture member, resulting in an increase in the resistance of the electric storage device.

The air permeability of the separator is preferably between 5 sec/100 ml and 600 see/100 ml. The air permeability means the time (second) needed for air in the amount of 100 ml to pass through the porous sheet. An air permeability of higher than 600 sec/100 ml is not preferable since it is difficult to achieve high mobility of lithium ions, which adversely affects the pre-doping speed of the lithium ions. An air permeability of lower than 5 sec/100 ml is not preferable since the strength of the separator is insufficient. More preferable air permeability of the separator is between 30 sec./100 ml and 500 see./100 ml.

A porosity of the separator is preferably between 30 % and 90 %. The porosity of lower than 30 % is not preferable since the amount of the electrolyte solution retained by the separator is decreased, so that the internal resistance of the electric storage device is increased. A porosity of higher than 90 % is not preferable since the sufficient strength of the separator cannot be achieved

A thickness of the separator is preferably between 5 µm and 100 µm. The thickness of more than 100 µm is not preferable since the distance between the positive electrode and the negative electrode increases, whereby the internal resistance increases. A thickness of less than five µm is not preferable since the strength of the separator is remarkably lowered, whereby short-circuiting is easy to occur in the electric storage device. A more preferable thickness of the separator is between 10 µm and 30 µm.

It is preferable from the viewpoint of safety that the separator has a characteristic called shut-down function of the separator in which, when the internal temperature of the electric storage device reaches the upper-limit temperature specified in the specification, the apertures of the separator are closed by the melting of the constituent of the separator.
Although depending upon the specification of the electric storage device, the temperature at which the closing is started is generally between 90 °C and 180 °C. When the material, such as polyimide, that is difficult to be melted at the temperature described above is used for the separator, it is preferable that the material capable of being melted at the temperature described above, such as polyethylene, is mixed in the separator.
The mixture here means not only the case in which a plurality of materials are merely mixed, but also the case in which two or more types of separators, each being made of different material, are stacked, or the case in which the materials of the separator are copolymerized. The separator having small heat shrinkage even if the internal temperature of the electric storage device exceeds the specified upper-limit temperature is more preferable from the viewpoint of safety.

The separator described above may be used alone or separators of the same type may be stacked, in accordance with the purpose and specification. The separators of a plurality of types may be stacked for use.

### F: Electrolyte solution

It is preferable that an aprotic polar solvent containing a lithium salt is used for the electrolyte solution since electrolysis does not even at a high voltage and lithium ions can stably be present. Examples of the aprotic polar solvent include ethylene carbonate, propylene carbonate, dimethyl carbonate, diethyl carbonate, ethyl methyl carbonate, g-butyrolactone, acetonitrile, dimethoxyethane, diethoxyethane, tetrahydrofuran, dioxolane, methylene chloride, sulfolane, etc, wherein these material are used alone or mixed with one another.
From the viewpoint of relative permittivity contributing to the charging/discharging characteristic, a freezing point and boiling point contributing to the temperature range in which the electric storage device can operate, and a burning point contributing to safety, propylene carbonate is preferably used.
However, when a graphite is used for the active material of the negative electrode, ethylene carbonate is preferably used as a substitute for the propylene carbonate, since the propylene carbonate is decomposed on the graphite at the potential of about 0.8 V (vs. Li/Li+) of the negative electrode.
The melting point of ethylene carbonate is 36 °C, so that it is solid at room temperature. Therefore, when the ethylene carbonate is used as the solvent of the electrolyte solution, it has to be mixed with the aprotic polar solvent other than ethylene carbonate.
An aprotic polar solvent having low viscosity and low freezing point, represented by diethyl carbonate or ethyl methyl carbonate, is preferably selected for the aprotic polar solvent used with the ethylene carbonate, from the viewpoint of charging/discharging characteristic and the temperature range in which the electric storage device can operate.
However, the electrolyte solution containing the aprotic polar solvent, in which the solvent is made of the material having low viscosity and low freezing point such as diethyl carbonate, and ethylene carbonate, causes a sharp reduction in ion conductivity due to freezing of the ethylene carbonate, when the ambient temperature becomes about -10 °C or lower.
Therefore, the low-temperature characteristic is likely to deteriorate. In order to improve the low-temperature characteristic, it is preferable to contain the above-mentioned propylene carbonate into the solvent of the electrolyte solution. Further, when graphite is used for the active material and the conductive material of the negative electrode, it is preferable to use graphite having low reductive decomposition characteristic of propylene carbonate.

Examples of the lithium salt include LiClO₄, LiAsF₆, LiBF₄, Lips₆, LiN(C₂F₅SO₂)², etc. Further, in order to lower the internal resistance due to the electrolyte solution, the concentration of the electrolyte in the electrolyte solution is preferably set to at least 0.1 mol/l or more. More preferably, it is set within the range of 0.5 mol/l to 1.5 mol/l. The lithium salt may be used alone or a plurality of lithium salts may be mixed.

An additive agent such as vinylene carbonate (VC), ethylene sulfite (ES), fluoroethylene carbonate (FEC), or derivative of these materials, may be used for improving the property. The additive amount is preferably set within the range of 0.01 to 10 vol.-%.
As an additive agent for giving flame resistance to the electric storage device, a phosphazene compound or a phosphazene derivative, fluorinated carboxylate ester, fluorinated phosphate ester, etc. may be added to the electrolyte solution. Examples of the additive agent for giving flame resistance to the electric storage device include Hoslite (manufactured by Nippon Chemical Industrial Co., Ltd.), (CF₃CH₂O)₃PO, (HCF₂CF₂CH₂O)²CO, etc.

Ionic liquid can be employed instead of the organic solvent. The combination of various cations and anions is proposed as the ionic liquid. Examples of the cations include N-methyl-N-propylpiperidinium (PP13), 1-ethyl-3-methyl-imidazolium (EMI), diethyl-methyl-2-methoxyethyl-ammonium (DEME), etc. Examples of the anions include bis(fluorosulfonyl)-imide (FSI), bis(trifluoromethanesulfonyl)-imide (TFSI), PF₆-, BF₄-, etc.

### G: Outer casing

Various materials generally used for a battery can be used for the outer casing. A metal material such as iron or aluminum can be used. A film material or the like made of resin can also be used. The shape of the outer casing is not particularly limited. The outer casing can be formed into a shape appropriately selected according to the purpose, such as a cylindrical shape or rectangular shape.
From the viewpoint of size and weight reduction of the electric storage device, it is preferable to use a film-type outer casing employing an aluminum laminate film. In general, a three-layered laminate film having a nylon film at the outer part, an aluminum foil at the middle part, and an adhesive layer such as a denatured polypropylene at the inner part is used.

The invention made by the present inventors has been specifically described above on the basis of the drawings. The present invention is not limited to the aforesaid embodiments, and various modifications are possible without departing from the scope of the present invention. The electric storage device according to the present invention is not limited to a lithium ion secondary battery or a lithium ion capacitor, but is applicable to various types of batteries such as magnesium ion secondary battery and a hybrid capacitor with these batteries.

### EXAMPLES

### Reference Example

The effectiveness of the present invention was verified by using the electric storage device having the structure described above. A lithium ion capacitor was used as the electric storage device. The lithium ion capacitor has a structure in which a negative electrode mixture member, having a metal lithium foil adhered onto a negative electrode, is provided at the outermost part of an electrode stacked unit, and the edge portions of separators that hold the negative electrode mixture member are all sealed. The lithium ion capacitor described above was formed as follows.

### Fabrication of the positive electrode

A phenolic resin was subject to the alkali activation to obtain an activated carbon having a BET specific surface area of 2200 m²/g. The activated carbon was fully washed to remove the residual ash and adjust the pH value. The activated carbon thus prepared was used as the positive electrode active material.

The positive electrode mixture material was prepared into a paste by thoroughly mixing 100 parts by weight of the positive electrode active material described above, 6 parts by weight of acetylene black manufactured by Denki Kagaku Kogyo Kabushiki Kaisha, 4 parts by weight of carboxymethyl cellulose, and water.
Six parts by weight of an emulsion of acrylate rubber binder in the form of solid was added to the paste, and water was added thereto to adjust viscosity, whereby a positive electrode slurry was prepared. Both surfaces of an aluminum foil having through-holes were coated with the positive electrode slurry thus prepared to thereby obtain a positive electrode.

### Fabrication of the negative electrode

Carbotron P-S(F), which was non-graphitizable carbon manufactured by Kureha Corporation, was used as the negative electrode active material. A paste was prepared by mixing 88 parts by weight of the active material, 6 parts by weight of acetylene black (special pressed product HS-100) manufactured by Denki Kagaku Kogyo Kabushiki Kaisha, and 3 parts by weight of sodium salt of carboxymethyl cellulose with water.
Four parts by weight of a latex of styrene butadiene rubber binder in the form of a solid was added to the paste, and water was added thereto to adjust viscosity, whereby a negative electrode slurry was prepared. Both surfaces of an expanded metal made of copper having through-holes were coated with the negative electrode slurry thus prepared to thereby obtain a negative electrode.

### Fabrication of the cell

The obtained positive electrode and the negative electrode were dried under reduced pressure. After drying, 14 positive electrodes, each having a size of a mixture material portion of 3.8 cm × 2.4 cm, and 15 negative electrodes, each having a size of a mixture material portion of 4.0 cm × 2.6 cm, were cut out. Then, 30 sheet separators, each having a thickness of 35 µm and having a size of 4.6 cm × 3.2 cm were cut out.
Among the positive electrodes, the negative electrodes, and the separators thus prepared, 14 positive electrodes, 13 negative electrodes, and 26 separators were stacked in the order of the positive electrode, the separator, the negative electrode, the separator, the positive electrode, the separator, the negative electrode, ... and the positive electrode, whereby an electrode stacked unit was formed.

Next, in the electrode stacked unit, a metal lithium foil having a size of 3.8 cm × 2.4 cm, and having a weight equal to half the weight by which the potential of the negative electrode upon applying voltage of 3.8 V between the positive electrode and the negative electrode after the pre-doping of lithium ions became 20 mV (vs. Li/Li+) was adhered onto one surface of the negative electrode, which was not used for the stack of the electrodes.
Thus, the negative electrode mixture member was formed. Two separators, which were not used for the stack of the electrodes, were arranged onto both surfaces of the negative electrode mixture member. Then, a polyethylene film having a thickness of 30 µm, and a width of 2 mm was applied between the separators holding the negative electrode mixture member and all over the edge portions of the separators.
Subsequently, heat and pressure were applied to the edge portions of the separators holding the polyethylene film with the use of a chamber-type vacuum sealer FCT-200 manufactured by Fuji Impulse Co., Ltd., whereby the edge portions of the separators were sealed.
This process of applying heat and pressure was repeated, with the result that the negative electrode mixture member was accommodated in the bag-like separator whose edge portions were all sealed. Two negative electrode mixture members accommodated in the bag-like separators were formed by repeating this process.

Two negative electrode mixture members, each being accommodated in the corresponding separator, were arranged at both outermost parts of the electrode stacked unit, whereby the electrode stacked unit provided with a lithium ion source was completed. The negative electrode mixture member arranged at the outermost part of the electrode stacked unit was arranged such that the metal lithium foil was positioned at the outermost part of the electrode stacked unit.
A positive electrode terminal was arranged and welded to the terminal welding portion of the positive electrode current collector, while a negative electrode terminal was arranged and welded to the terminal welding portion of the negative electrode current collector.

As a reference electrode for measuring the potentials of the positive electrode and the negative electrode in the electric storage device, a lithium electrode was formed by the method in which a metal lithium foil was press-bonded to a stainless mesh having a thickness of 120 µm, and a nickel terminal was welded to the stainless mesh. The lithium electrode was arranged at one side of the outermost part of the electrode stacked unit provided with the lithium ion source.
The outer periphery of the electrode stacked unit and the lithium electrode used for the potential reference were covered by a sheet separator having a thickness of 35 µm, and the portion where the sheet separators were overlapped with each other was taped by a polyimide adhesive tape, whereby a lithium ion capacitor device was completed.

The device of the lithium ion capacitor was covered by an aluminum laminate film, which was an outer casing, and then, three sides of the aluminum laminate film were heat-sealed. Thereafter, an electrolyte solution, which was prepared by dissolving LiPF₆ at 1.2 mol/l into propylene carbonate, was injected into the aluminum laminate film. The resultant was subject to a vacuum-impregnating process. Then, the remaining one side of the aluminum laminate film was vacuum-sealed to assemble 100 cells of the lithium ion capacitor used in the Reference Example.

### Comparative Example

100 cells of lithium ion capacitor used in the Comparative Examples were formed in the same manner as in the Reference Example, except that the edge portions of a pair of separators, which were arranged so as to hold the negative electrode mixture member, were not sealed.

### Consideration of Reference Example and Comparative Examples

The lithium ion capacitor cells formed in the Reference Example and Comparative Example were left still for two weeks under room temperature, by which the pre-doping of lithium ions was completed. Thirty-four cells in the Comparative Example were swollen, which were defective cells. When the potentials of the positive electrode and the negative electrode were confirmed with the use of the lithium electrode, it was found that the potential of the positive electrode was greatly below 2 V (vs. Li/Li+).
It was considered as follows. Specifically, the metal lithium piece dropping from the metal lithium was brought into contact with the positive electrode (short-circuit) to decrease the potential of the positive electrode. Therefore, gas caused by reductive decomposition of the electrolyte solution was produced on the positive electrode. On the other hand, there were no cells in the Reference Example having the condition described above.
Table 1 shows the result obtained by measuring the cell voltage, potential of the positive electrode, and potential of the negative electrode of each of 100 cells in the Reference Example and each of 66 cells in the Comparative Example, which were not swollen.
It was confirmed that, although the number of samples was larger in the Reference Example, the variation in the cell voltage, potential of the positive electrode, and potential of the negative electrode was small. It was inferred that there were cells in the Comparative Example that were not swollen but might cause micro-short.

Ten cells were optionally extracted from the cells in the Reference Example and from the cells in the Comparative Example respectively, and the extracted cells were disassembled to investigate the inside of each cell. For the cells in the Comparative Example, it was confirmed that microparticles having metallic luster, which were thought to be metal lithium, were present in the electrolyte solution and the electrode stacked unit other than the portion where the negative electrode mixture member was arranged.
Accordingly, it is understood that, in the cells in the Comparative Example, a predetermined pre-doping amount of lithium ions cannot be doped into the negative electrode due to the isolation of metal lithium, and there is a risk that the cell is unexpectedly short-circuited.
On the other hand, the presence of the materials that are thought to be the metal lithium was not confirmed in the cells in the Reference Example. It is understood from the above that the cell in the Reference Example according to the embodiment of the present invention is excellent in quality.

**Table 1**

| | Reference Example | Comparative Example |
|---|---|---|
| Average value of cell voltage (V) | 2.866 | 2.677 |
| Standard deviation of cell voltage (V) | 0.0046 | 0.2313 |
| Difference between maximum positive-electrode potential and minimum positive-electrode potential (V) | 0.014 | 0.716 |
| Difference between maximum negative-electrode potential and minimum negative-electrode potential (V) | 0.006 | 0.027 |
| Product yield (%) | 100 | 66 |

### List of Reference Signs

- 10 =: storage device
- 11 =: outer casing
- 12 =: stacked unit
- 13 =: positive electrodes
- 14 =: negative electrodes
- 15 =: negative electrode
- 16 =: metal lithium foil
- 17 =: separator
- 18 =: bag-like separator
- 18a =: edge portions
- 20 =: positive electrode current collector
- 20a =: through-holes
- 20b =: terminal welding parts
- 21 =: positive electrode mixture layer
- 22 =: positive electrode terminal
- 23 =: negative electrode current collector
- 23a =: through-holes
- 23b =: terminal welding parts
- 24 =: negative electrode mixture layer
- 25 =: negative electrode terminal
- 26 =: negative electrode mixture member
- 30 =: electric storage device
- 31 =: positive electrodes
- 32 =: negative electrodes
- 33 =: positive electrode current collector
- 34 =: negative electrode current collector
- 35 =: metal lithium foil

## Claims

1. An electric storage device capable of charging and discharging, comprising positive electrodes (13), each having a positive electrode current collector (20) and a positive electrode mixture layer (21), and negative electrodes (14), each having a negative electrode current collector (23) and a negative electrode mixture layer (24) containing a negative electrode active material allowing lithium ions to be reversibly doped into and dedoped from the material,
- wherein at least one of the negative electrodes (15) is formed as a negative electrode mixture member (26) including a metal lithium (16) as an ion source in addition to the negative electrode current collector (23) and the negative electrode mixture layer (24),
- wherein the negative electrode mixture member (26) is accommodated in a bag-like separator (18), **characterized in that**
- the bag-like separator (18) is sealed with a polymer adhesive comprising polyvinylidene fluoride or polyethylene oxide at the edge portions of the separator (18).

2. The electric storage device according to claim 1,
wherein the edge portion of the separator (18) is sealed all around.

3. The electric storage device according to claim 1 or 2,
wherein the positive electrode current collector (20) and the negative electrode current collector (23) are formed with a plurality of through-holes (20a, 23a).

4. A production method of an electric storage device capable of charging and discharging, including positive electrodes (13), each having a positive electrode current collector (20) and a positive electrode mixture layer (21), and negative electrodes (14), each having a negative electrode current collector (23) and a negative electrode mixture layer (24) containing a negative electrode active material allowing lithium ions to be reversibly doped into and dedoped from the material,
the method comprising the following steps:
- a step of forming at least one (15) of the negative electrodes (14) as a negative electrode mixture member (26) including a metal lithium (16) as an ion source in addition to the negative electrode current collector (23) and the negative electrode mixture layer (24), and
- a step of accommodating the negative electrode mixture member (26) in a bag-like separator (18), and
- a step of sealing the bag-like separator (18) with a polymer adhesive comprising polyvinylidene fluoride or polyethylene oxide at the edge portions of the separator (18).

## Patentansprüche

1. Elektrische Speichervorrichtung,
die zum Aufladen und Entladen in der Lage ist,
wobei die elektrische Speichervorrichtung Folgendes aufweist:
positive Elektroden (13), die jeweils einen Positivelektroden-Stromkollektor (20) und eine Positivelektroden-Mischschicht (21) aufweisen, und negative Elektroden (14), die jeweils einen Negativelektroden-Stromkollektor (23) und eine Negativelektroden-Mischschicht (24) aufweisen, die ein aktives Negativelektroden-Material enthält, das ein reversibles Dotieren von Lithiumionen in das Material sowie Entdotieren von Lithiumionen aus dem Material ermöglicht,
- wobei mindestens eine der negativen Elektroden (15) als Negativelektroden-Mischelement (26) mit einem Metall-Lithium (16) als Ionenquelle zusätzlich zu dem Negativelektroden-Stromkollektor (23) und der Negativelektroden-Mischschicht (24) ausgebildet ist,
- wobei das Negativelektroden-Mischelement (26) in einem taschenartigen Trennelement (18) aufgenommen ist,
**dadurch gekennzeichnet,**
- **dass** das taschenartige Trennelement (18) mit einem Polymer-Haftmaterial, das Polyvinylidenfluorid oder Polyethylenoxid aufweist, an den Randbereichen des Trennelements (18) dicht verschlossen ist.

2. Elektrische Speichervorrichtung nach Anspruch 1,
wobei der Randbereich des Trennelements (18) ringsum dicht verschlossen ist.

3. Elektrische Speichervorrichtung nach Anspruch 1 oder 2,
wobei der Positivelektroden-Stromkollektor (20) und der Negativelektroden-Stromkollektor (23) mit einer Vielzahl von Durchgangsöffnungen (20a, 23a) ausgebildet sind.

4. Verfahren zum Herstellen einer elektrischen Speichervorrichtung, die zum Aufladen und Entladen in der Lage ist,
wobei die elektrische Speichervorrichtung Folgendes aufweist:
positive Elektroden (13), die jeweils einen Positivelektroden-Stromkollektor (20) und eine Positivelektroden-Mischschicht (21) aufweisen, und negative Elektroden (14), die jeweils einen Negativelektroden-Stromkollektor (23) und
eine Negativelektroden-Mischschicht (24) aufweisen, die ein aktives Negativelektroden-Material enthält, das ein reversibles Dotieren von Lithiumionen in das Material sowie Entdotieren von Lithiumionen aus dem Material zulässt,
wobei das Verfahren folgende Schritte aufweist:
- einen Schritt zum Bilden von mindestens einer (15) der negativen Elektroden (14) als Negativelektroden-Mischelement (26) mit einem Metall-Lithium (16) als Ionenquelle zusätzlich zu dem Negativelektroden-Stromkollektor (23) und der Negativelektroden-Mischschicht (24), und
- einen Schritt zum Aufnehmen des Negativelektroden-Mischelements (26) in einem taschenartigen Trennelement (18), und
- einen Schritt zum dichten Verschließen des taschenartigen Trennelements (18) mit einem Polymer-Haftmaterial, das Polyvinylidenfluorid oder Polyethylenoxid aufweist, an den Randbereichen des Trennelements (18).

## Revendications

1. Dispositif de stockage électrique capable d'être chargé et déchargé, comprenant des électrodes positives (13), chacune ayant un collecteur de courant d'électrode positive (20) et une couche de mélange d'électrode positive (21), et des électrodes négatives (14), chacune ayant un collecteur de courant d'électrode négative (23) et une couche de mélange d'électrode négative (24) contenant un matériau actif d'électrode négative permettant à des ions lithium d'être dopés dans le matériau et d'être dédopés hors de celui-ci de façon réversible,
- dans lequel l'une au moins des électrodes négatives (15) est formée comme un élément de mélange d'électrode négative (26) incluant un lithium métallique (16) à titre de sources d'ions en plus du collecteur de courant d'électrode négative et de la couche de mélange d'électrode négative (24),
- dans lequel l'élément de mélange d'électrode négative (26) est abrité dans un séparateur analogue à un sac (18),
**caractérisé en ce que** le séparateur analogue à un sac (18) est scellé avec un adhésif en polymère comprenant du fluorure de polyvinylidène ou de l'oxyde de polyéthylène au niveau des portions de bordure du séparateur (18).

2. Dispositif de stockage électrique selon la revendication 1,
dans lequel la portion de bordure du séparateur (18) est scellée sur tout le pourtour.

3. Dispositif de stockage électrique selon la revendication 1 ou 2,
dans lequel le collecteur de courant d'électrode positive (20) et le collecteur de courant d'électrode négative (23) sont formés avec une pluralité de trous traversants (20a, 23a).

4. Procédé de production d'un dispositif de stockage électrique capable d'être chargé et déchargé, incluant des électrodes positives (13), chacune ayant un collecteur de courant d'électrode positive (20) et une couche de mélange d'électrode positive (21), et des électrodes négatives (14), chacune ayant un collecteur de courant d'électrode négative (23) et une couche de mélange d'électrode négative (24) contenant un matériau actif d'électrode négative permettant à des ions lithium d'être dopés dans le matériau et d'être dédopés hors de celui-ci de façon réversible,
le procédé comprenant les étapes suivantes:
- une étape consistant à former l'une au moins (15) des électrodes négatives (14) comme un élément de mélange d'électrode négative (26) incluant un lithium métallique (16) comme une source d'ions en plus du collecteur de courant d'électrode négative (23) et de la couche de mélange d'électrode négative (24), et
- une étape consistant à abriter l'élément de mélange d'électrode négative (26) dans un séparateur analogue à un sac (18), et
- une étape consistant à sceller le séparateur analogue à un sac (18) avec un adhésif en polymère comprenant du fluorure de polyvinylidène ou de l'oxyde de polyéthylène au niveau des portions de bordure du séparateur (18).
